Europäisches Patentamt

European Patent Office

Office européen des brevets

(11) Publication number: **0 318 706 B1**

## EUROPEAN PATENT SPECIFICATION

(45) Date of publication of patent specification: **29.07.92**

(51) Int. Cl.⁵: **F02C 3/30**, F01K 21/04, F02C 9/16

(21) Application number: **88118127.5**

(22) Date of filing: **31.10.88**

(54) **Water spray ejector system for steam injected engine.**

(30) Priority: **30.11.87 US 126090**

(43) Date of publication of application:
**07.06.89 Bulletin 89/23**

(45) Publication of the grant of the patent:
**29.07.92 Bulletin 92/31**

(84) Designated Contracting States:
**CH DE FR GB IT LI SE**

(56) References cited:
**EP-A- 0 081 995       EP-A- 0 086 504
EP-A- 0 184 137       EP-A- 0 209 820
EP-A- 0 275 121       DE-A- 3 419 560
FR-A- 2 092 741       GB-A- 2 187 273**

(73) Proprietor: **GENERAL ELECTRIC COMPANY
1 River Road
Schenectady New York 12305(US)**

(72) Inventor: **Hines, William Ronald
9941 Knollbrook Terrace
Cincinnati Ohio 45242(US)**

(74) Representative: **Catherine, Alain
General Electric France Service de Propriété
Industrielle 18 Rue Horace Vernet
F-92136 Issy-Les-Moulineaux Cedex(FR)**

Rank Xerox (UK) Business Services

## Description

This invention relates to steam injected gas turbine engines, and, more particularly, to apparatus and methods for augmenting steam injection with water injection to thereby increase the power output of the steam injected gas turbine engine.

Steam injected gas turbine engines are known which use gas flowing therethrough following a Brayton Cycle and also having steam flowing therethrough which follows a Rankins Cycle. Frequently, aircraft derivative engines are used for such steam injected engines. The aircraft engine is modified to include an output power turbine, as well as additional fixed recuperative boilers at its output. The recuperative exhaust boilers provide the steam for injection into various locations of the engine, and especially to the combustor. While the steam could also be supplied from an external source, generally, the steam injected gas turbine engine is supplied with steam from its own exhaust boiler system.

One limitation on power output of the steam injected engine is that the stream from its own fixed boilers may not be of adequate low superbeat to allow the gas turbine to run to its maximum capability. For example, the combustors could probably take more water vapor both in its dome and in its bypass diluent air which flows from the compressor discharge. However, because of the presence of the steam injection lines flowing into the combustor, there is no possibility provided for further water augmentation to the combustor to increase the amount of water vapor.

DE-A- 3 419 560 shows a method of increasing the power output of a steam injected gas turbine engine having a compressor, a combustor, a turbine and a system for injection of superheated steam into the gas flow path, the method comprising spraying water into the steam injection system whereby the water is evaporated by the superheated steam, and mixing the evaporated water with the existing steam in the steam injection system so that the resultant steam is at superheated temperature to obtain a resultant increased mass flow of superheated steam mixture for injection into the gas flow path.

GB-A-2 187 273 describes a method of operating a gas turbine cycle in apparatus including a zone in a combustion chamber into which fuel and air are fed for combustion in which steam is also fed into said zone of combustion chamber so as to surround the resulting flame and to exclude air from the part of said zone about the flame.

It is, accordingly, an object of the present invention to provide a steam injected gas turbine engine which avoids the aforementioned problems of prior art steam injected engines.

Another object of the present invention is to provide means for augmenting the steam is a steam injected engine with water injection.

Still a further object of the present invention is to provide a method of adding to the amount of water vapor in the combustor of a gas turbine engine in order to increase the power output of the engine.

Another object of the present invention is to provide a water ejector and mixer system for adding water to the steam injection system of a steam injected gas turbine engine.

Yet another object of the present invention is to provide versatility in using boiler available or standing hardware with a derivative engine system of different or uprated exhaust flow parameters. The delivered highly superheated steam can be water injected to create more steam and maximize engine power output.

A further object of the present invention is to provide versatility in using its boiler hardware in that water injection in the steam lines can match power requirements; i.e., more water injection gives more power at lower thermal efficiency, less water injection could match lower power requirements it higher thermal efficiency. This assumes that the boilers have capability to deliver highly superheated steam when installed either is an engine's recuperator or as an external source installation.

A still further object of the present invention is to allow an engine system which is matched to its recuperative boilers which are delivering low superheat steam for maximum power, to also utilize an available external heat source to superheat that steam so that water injection could then be used to increase engine system power output further by generating more steam.

Yet a further object of the present invention is to provide a system for adding additional steam to the combustor of a steam injected engine in order to increase the power output of the engine.

Briefly, in accordance with the present invention, there is provided a method for increasing the power output of a steam injected gas turbine engine having a compressor, a combustor, said combustor comprising a dome receiving fuel and steam from a dual flow nozzle providing fuel in the center and steam coaxially around fuel port, and a turbine in series combination having, a gas flow path passing through the engine, and having a steam injection system which injects superheated steam into the gas flow path, the method comprising spraying water into the steam injection system whereby the water is evaporated by the superheated steam, and characterized by mixing the evaporated water with the existing steam in the steam injection system so that the resultant steam is at a temperature of at least 28°C (50°F) superheat and additional heat is added to the dome from the dual nozzle, to obtain a resultant increased mass flow of superheated steam mixture for injection into the gas flow path. There is also included a system for spraying water into the steam injection system, whereupon the water is evaporated by the superheated steam in the steam injection system and mixed with the steam so that the resultant steam is at a temperature of at least 28°C (50°F) superheat to obtain an incrased mass flow of superheated steam which is injected into the gas flow path.

In one embodiment of the invention, the steam injection system including a water spray ejector and mixer, is directed into the fuel port to increase the water vapor provided to the dome of the combustor. In a further embodiment of the invention, the steam injection system including a water spray ejector and mixer, is further directed to the bleed ports, which then flow into the combustor shell.

In addition to providing a water ejector and mixer system for water augmentation into the combustor, water augmentation can also be provided to other steam lines in the engine, such as, a high pressure turbine, a low pressure turbine, or even a power turbine.

This invention is useful when a recuperative boiler system is delivering superheated steam several hundred degrees above saturation temperature at a given pressure to the engine or when the steam is from an external source also at high superheated temperature levels. It will allow engines using mis-matched boilers (not at minimum superheat for maximum power output) to attain that maximum power output within engine red-line or limiting operational parameters, whether these boilers are its own recuperation system or are external source boilers. Recuperative boilers delivering steam at +23°C (+50°F) superheat at a given pressure to an engine could utilize this concept if the steam lines were routed to an external available heat source which could superheat steam to allow downstream water injection in those steam lines. Thus, standing boiler systems could be adapted for use with derivative steam injection engines wherein water pumps could provide the required pressure and flow and the boiler heat transfer surfaces could generate a level of superheated steam. This system could then be augmented by steam line water injection to maximize the engine system power output within operational limits.

The aforementioned objects, features and advantages of the invention will, in part, be pointed out with particularity, and will, in part, become obvious from the following more detailed description of the invention, taken in conjunction with the accompanying drawing, in which:

Fig. 1 is a schematic drawing of a steam injected gas turbine engine with the steam being supplied from recuperative exhaust boilers, at the output of the engine;

Fig. 2 is a schematic drawing of the water spray ejector system of the present invention added to the steam injection system for providing water augmentation to the combustor of the engine.

Fig. 3 is a schematic drawing of a steam injected gas turbine engine using an external source of heat to add superheat temperature to the output from the engine boilers such that additional water augmentation can be provided into the water spray ejector lines feeding the steam ejection system, and

Fig. 4 is a schematic drawing of the steam injected gas turbine engine using an external source of waste steam injected into the steam injection systems for adding steam to the engine.

In the various figures of the drawing, like reference characters designate like parts.

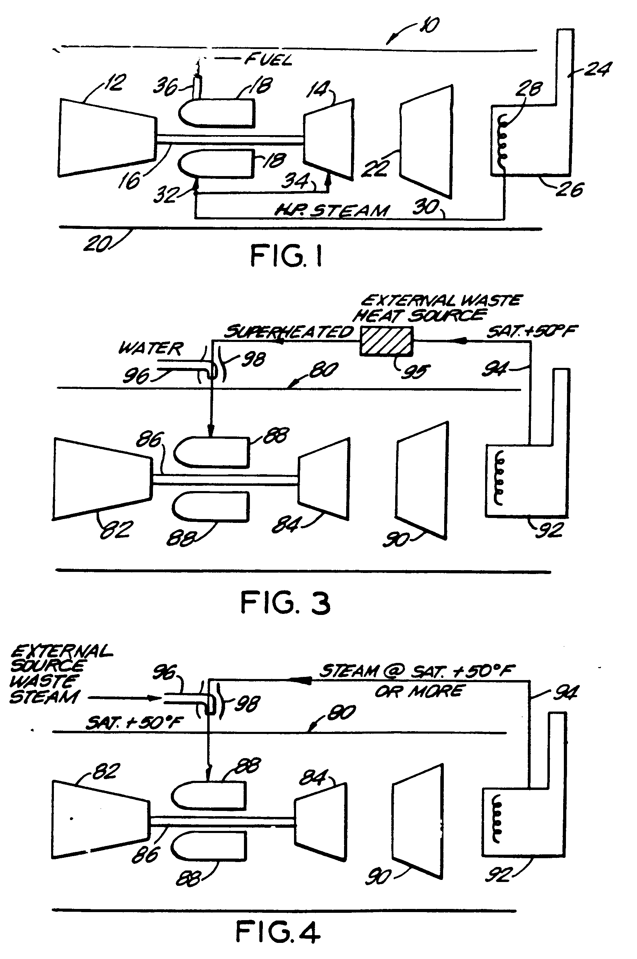

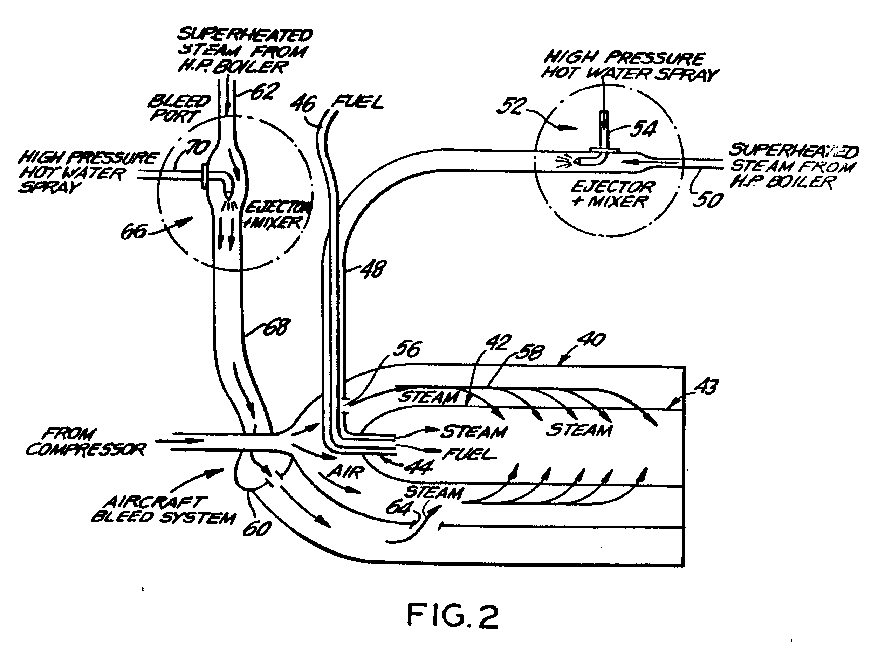

Referring now to Fig. 1, there is generally shown a steam injected engine 10 including a core engine comprising compressor 12, coupled to turbine 14, through an interconnecting shaft 16. A burner or combustor system 18 is provided between the compressor and the turbine. The core engine is enclosed within a casing 20. The core engine could typically be an aircraft derivative engine.

An output power turbine 22 is aerodynamically connected to the core engine for extracting the power output from the engine. A mixture of air and steam from the engine is exhausted through the exhaust stack 24. Included in the exhaust system 26 are recuperative exhaust boiler 28 which supply high pressure steam 30 for injection back into the engine. The injection can be fed into various locations, such as, the combustor as shown at 32, or into the vanes of any of the turbines as shown at 34. The fuel line is shown at 36 entering the combustor.

The steam injection is generally limited by the supply provided from the fixed boilers. Although steam could also be supplied from an external source, in most cases, the supply comes directly from the fixed boiler system in order to enhance the efficiency of the engine. Nevertheless, external waste steam or heat will also improve engine system thermal efficiency.

The amount of steam that can be injected into the combustor is limited to a flame dome steam or water to fuel ratio of about 2.75, or slightly higher, dependent upon the design. Above this ratio, the flame will generally quench. The steam injected into the combustor is generally sized to control nitrous oxide (NOX) emissions. Such steam is typically provided into the fuel ports being sent into the dome of the combustor. Typically, a dual flow nozzle system is used with the fuel being provided in the center and the steam being provided coaxially around the fuel port.

The engine is also typically provided with bleed ports. Such bleed ports are normally used in the aircraft engine for extracting air for use within the cabin of the aircraft. In the case of the derivative engine used as a steam injected engine, the bleed ports are used for injection of steam. These bleed ports are sized to take as much steam as possible with minimum pressure losses.

Generally, the amount of steam that is provided to the steam injected engine is less than that which the turbine engine could use to maximum capability. The amount of steam being generally limited by the amount of steam available from the fixed boiler system. Even when additional external steam could be provided, the cost of such additional steam is such as would not be worthwhile to provide further enhancement to the engine, except if it were waste steam anyway.

While water augmentation could be provided, the gas turbine is not provided with means for such water augmentation, since the steam injection lines are being used into the combustor and bleed ports of the engine.

The present invention provides for such water augmentation by spraying the water into the steam injection lines, rather than providing water augmentation directly into the combustor. The water is added into the steam lines and immediately is converted into a water vapor. The water vapor and the steam mix, such that the total product remains superheated steam of at least 28°C (50°F) superheat temperature. Such increase in the mass flow of the superheat steam is then introduced into the combustor and in other locations within the gas turbine.

The increased mass flow of the superheat steam could be added at various locations in order to feed the combustor. It could be added to the fuel port and thereby injected into the dome, whereby the amount of steam could be increased up to the limit of about 2.75/1 ratio of water to fuel. The increased mass of water could also be added to the bleed port superheat steam, up to a limit of less than 100 % relative humidity in the combustor bypass diluent air after mixing. This preceding statement also applies to steam line water injection at other non-combustion ports within the engine, i.e., at least + 28°C (+ 50°F) superheat for the mixture must exist at local pressure.

The result of the injection of water into the steam lines is to increase the amount of steam in the system. This will result in a power output increase due to the added mass flow. Although there will be an overall thermal efficiency loss, the power augmentation will substantially reduce the cost per kilowatt output of the system.

The thermal efficiency loss will result from the fact that the heat of vaporization of the water at the high pressure cannot be recovered in the exhaust system. Additional loss of thermal efficiency could also result if enough water is added to the fuel port system whereby the combustion efficiency is decreased.

Preferably, the first place to add the water injection would be at the bleed ports. Additionally, the water injected into the steam could be introduced into the fuel port if combustion efficiency is not decreased.

Referring to Fig. 2, there is shown schematically a combustor 40 having a dome 42 into which is injected fuel and steam from a dual flow nozzle 44. The fuel is injected from the central passageway 46 with the outer coaxial passageway 48 providing the steam. The steam is superheated and comes from the high pressure fixed boiler system at its output of the engine and enters the steam injection lines at 50.

Along the steam lines 48, there is provided a water ejector and mixer system, shown generally at 52. The ejector and mixer system 52 includes an inlet pipe 54 in which high pressure, hot water is sprayed directly into the superheated steam pipe 48. The hot water is immediately vaporized and mixed with the steam flowing in the pipe, whereby the resultant will also be superheated steam of at least 28°C (50°F) superheat. However, there will be an increase in the mass flow of the steam. The steam in sent along the pipes 48 for injection into the dome.

An auxiliary outlet 56 can be provided along the passageway 48 whereby some of the steam also flows around the dome in the shell along lines 58 for ultimate passage into the liner 43 for yet further dilution.

In addition to providing an ejector and mixer in the steam lines 48 sent to the dome, an ejector and mixer of the present invention can also be provided in the steam injection lines feeding into the bleed system. Specifically, the aircraft bleed system includes a portion 60 surrounding the combustor 40. Superheated steam from the high pressure boiler is provided into the bleed port 62 of the bleed system for passage through the bleed system and through the inlet 64 into the combustor shell. The high pressure, hot water ejector and mixer 66 is added to the steam lines 68 feeding into the bleed system. The hot water is sprayed into the system through the inlet tube 70 and, again, immediately vaporized, whereby the resultant steam will be at least 50° superheat. This increased flow of steam is sent to the bleed system for passage into the combustor liner.

By way of example, typically, an engine running on fixed boilers or external source boilers at high superheat and holding NOX emissions could take another 2% of water into the fuel port and another 2.5% into the bleed ports. This could increase the power output by about 28% at a loss in thermal efficiency of about -1.4 points, when the low pressure turbine inlet temperature is held constant and no other engine limits are restrictive.

The water that is added should be about 70 micron size or smaller droplets, which would immediately evaporate in the superheated steam. The use of such sized droplets avoids any erosion problem on the blades of the turbine or the combustor proper.

The amount of water added can be as much as will evaporate. Typically, this should be up to a limit of less than 100% humidity locally at the static pressure of the point at which the steam is injected into the air. The resultant of the water vapor and the existing steam should be superheat steam of at least (50°F) 28°C superheat of the total mix of the steam.

The advantage of injecting water in the steam pipes is that the added water will almost immediately vaporize and enter the combustor as a vapor and not as droplets. Furthermore, it is the only way additional water can be added to the fuel dome, since both the fuel and steam are delivered by dual flow nozzles. An additional feature is that now water can also be added to the bypass diluent flow from the compressor, since it will enter as a vapor. Previous water augmentation systems only added water to the combustor dome area and did so directly to the combustor.

The water injection system could be used to deliver external source stem of at least + 28°C (+ 50°F) superheat so as to mix with steam (s) coming from its own recuperative boilers. Thus, waste steam would be introduced to the engine system using available piping which would increase both power output and thermal efficiency. The thermal efficiency result for the waste steam would be about 0.15 for that part which would have been wasted.

Referring now to Fig. 3, there shown generally an engine 80 including a compressor 82 interconnected to a turbine 84 by means of a shaft 86. Combustors 88 are placed between the compressor and the turbine. An output power turbine 90 is aerodynamically connected to the core engine for extracting the power. A recuperative boiler system 92 contained within the output stack is used to provide the steam for injection back into the system along line 94. The steam that is provided is at a temperature of 28°C (50°F) superheat which would normally be adequate for injection into the combustor system. However, in the present case, in order to be able to add additional water augmentation, the steam is initially passed through external waste heat source 95 in order to add additional temperature to the superheated steam. Once additionally superheated, water can now be added at 96 into the water spray ejector device shown generally at 98.

Using this system, additional water augmentation can be provided by making use of external waste heat that might be available for adding heat to the steam coming out of the recuperative boiler of the engine itself.

Referring to Fig. 4, there is again shown the engine of Fig. 3 with like parts identified in a like manner. Here again, steam is provided from the recuperative boiler 92 along line 94. Such steam is at least at a temperature of 28°C (50°F) superheat. In this case, an external source of waste steam also at least 28°C (50°F) superheat is injected into the water spray ejector and mixer system. Instead of supplying water as was shown in Fig. 3 with the water immediately turning into steam, steam directly is provided from an external source.

Because of the availability of the water spray ejector and mixer system of the present invention, either water or steam can be injected to provide augmentation. In this way, the engine can be matched to the desired power requirements. More water injection can be provided in order to give more power at lower thermal efficiency. Less water injection can match lower power requirements at high thermal efficiency.

Although the technique has been shown for use in adding mass flow to the combustor, the technique could also be used to augment power through any steam line into the engine, such as, the steam line to the low pressure turbine or high pressure turbine or the power turbine. Also, any vane steam cooling could be enhanced by adding water spray to that steam, as long as the temperature remains above the saturation temperature at that pressure.

**Claims**

1. A method of increasing the power output of a steam injected gas turbine engine having a compressor, a combustor (40), said combustor comprising a dome (42) receiving fuel and steam from a dual flow nozzle (44) providing fuel in the center and steam coaxially around the fuel port, and a turbine in series combination with a gas flow path passing therethrough, and having a system for injection of superheated steam into the gas flow path, the method comprising spraying water into the steam injection system whereby the water is evaporated by the superheated steam, and characterized by mixing the evaporated water with the existing steam in the steam injection system so that the resultant steam is at a temperature of at least 28°C (50°F) superheat and additional steam is added to the dome from the dual nozzle, to obtain a resultant increased mass flow of superheated steam mixture for injection into the gas flow path.

2. The method as in claim 1, wherein the water sprayed into the steam injection system is less than 70 micrometers size droplets.

3. The method as in claim 1, wherein the pressure of the water sprayed into the steam injection system is at least as high as the pressure of the superheated steam in the system.

4. The method as in claim 1, wherein the water is preheated.

5. The method as in claim 1, wherein the ratio of the steam to fuel in the dome is maintained at 2.75/1.

6. The method as in claim 1, wherein the combustor receives diluent air from the compressor discharge, and wherein the steam injection system adds steam to the diluent air.

7. The method as in claim 6, wherein the resultant superheated steam is maintained at a level less than 100% relative humidity in the diluent air.

8. The method as in claim 1, wherein the steam injection system also feeds a bleed port (62) at an entrance to the combustor, and water is sprayed into the bleed port.

9. The method as in claim 8, wherein the resultant superheated steam from the bleed port mixes with combustor bypass diluent air from the compressor discharge.

10. The method as in claim 1, wherein the gas turbine further comprises a recuperative exhaust boiler system (12) for providing the steam for the steam injection system.

11. The method as in claim 1, wherein the steam for the steam injection system is supplied from sources external to the gas turbine.

12. The method as in claim 1, wherein the resultant steam is applied to vanes of the turbines (s), and the temperature of the resultant steam is above the saturation temperature at the pressure at which it is applied to the vanes.

13. The method as in claim 10, and comprising the further step of applying waste heat from an external source to increase the temperature of the superheated steam from the recuperative exhaust boiler (12) whereby more water can be added into the steam injection system and still maintain the resultant steam mixture at superheated steam.

14. The method as in claim 1, and further comprising the step of applying waste steam from an external source into the steam injection system.

15. A gas turbine engine comprising in series flow relationships, a compressor, a combustor (40), and a turbine, a gas flow path through the engine, a fuel and steam system and having a dual flow nozzle (44) for providing fuel in the center and steam coaxially around the fuel port to the dome (42) of the combustor, and characterized by a water spray ejector and mixer means (52, 66) coupled to the dual flow nozzle, for spraying water into the superheated steam for vaporization of the water by the superheated steam flowing therein, and for mixing the water vapor with the superheated steam to produce a resultant superheated steam mixture of greater mass flow for injection into the gas flow path, said superheated steam mixture having a resultant steam temperature of at least 26°C (50°F) superheat.

16. A gas turbine engine as in claim 15, and further comprising an engine bleed system coupled to the gas flow path and having a bleed port (62), said steam injection system being further coupled to the bleed port for feeding superheated steam to the gas flow path, and wherein said water spray ejector and mixer means (52, 66) is coupled to the bleed system.

17. A gas turbine engine as in claim 16, wherein said bleed system is coupled to the combustor to supply the resultant steam mixture to bypass diluent air in the combustor (40).

18. A gas turbine engine as in claim 15, and comprising vanes of turbines, said steam injection system and said spray water ejector and mixer means (52, 66) being coupled to said vanes whereby the resultant steam mixture is applied to the vanes.

19. A gas turbine engine as in claim 15, and comprising a mis-matched external source boiler (92) to said gas turbine engine for supplying the steam for said steam injection system.

**Revendications**

1. Procédé pour accroître la puissance d'un moteur à turbine à gaz à injection de vapeur comportant un compresseur, un brûleur (40), ledit brûleur comprenant un dôme (42) recevant le combustible et la vapeur en provenance d'une tuyère à double flux (44), fournissant le combustible au centre et la vapeur coaxialement autour de l'orifice de combustible, et une turbine en combinaison série avec un trajet d'écoulement de gaz passant dans celle-ci, et possédant un système pour l'injection de vapeur surchauffée dans le trajet d'écoulement de gaz, ledit procédé consistant à pulvériser de l'eau dans le système d'injection de vapeur de manière que l'eau soit évaporée par la vapeur surchauffée, et étant caractérisé en ce que l'on mélange l'eau évaporée avec la vapeur existante dans le système d'injection de vapeur de manière que la vapeur résultante se trouve à une température de surchauffe d'au moins 28°C (50°F), et de la vapeur supplémentaire est ajoutée au dôme à partir de la tuyère double, pour obtenir un écoulement massique résultant accru d'un mélange de vapeur surchauffée pour l'injection dans le trajet d'écoulement gazeux.

2. Procédé selon la revendication 1, dans lequel l'eau pulvérisée dans le système d'injection de vapeur est constituée de gouttelettes d'une dimension inférieure à 70 microns.

3. Procédé selon la revendication 1, dans lequel la pression de l'eau pulvérisée dans le système d'injection de vapeur est au moins aussi élevée que la pression de la vapeur surchauffée dans le système.

4. Procédé selon la revendication 1, dans lequel l'eau est préchauffée.

5. Procédé selon la revendication 1, dans lequel le rapport de la vapeur au combustible dans le dôme est maintenu égal à 2,75/1.

6. Procédé selon la revendication 1, dans lequel le brûleur reçoit de l'air d'appoint provenant de la sortie du compresseur, et en ce que le système d'injection de vapeur ajoute de la vapeur à l'air d'appoint.

7. Procédé selon la revendication 6, dans lequel la vapeur surchauffée résultante est maintenue à un niveau inférieur à 100 % d'humidité relative dans l'air d'appoint.

8. Procédé selon la revendication 1, dans lequel le système d'injection de vapeur alimente également un orifice de prise (62) à l'entrée du brûleur, et de l'eau est pulvérisée dans l'orifice de prise.

9. Procédé selon la revendication 8, dans lequel la vapeur surchauffée de l'orifice de prise se mélange à l'air d'appoint du conduit de dérivation du brûleur en provenance de la sortie du compresseur.

10. Procédé selon la revendication 1, dans lequel la turbine à gaz comporte en outre un système (12) de chaudière de récupération de sortie pour fournir de la vapeur au système d'injection de vapeur.

11. Procédé selon la revendication 1, dans lequel la vapeur destinée au système d'injection de vapeur est alimentée à partir de sources extérieures à la turbine à gaz.

12. Procédé selon la revendication 1, dans lequel la vapeur résultante est appliquée aux ailettes des turbines (s), et en ce que la température de la vapeur résultante est supérieure à la température de saturation à la pression à laquelle elle est appliquée aux ailettes.

13. Procédé selon la revendication 10, dans lequel la phase supplémentaire d'application de chaleur perdue en provenance d'une source extérieure pour accroître la température de la vapeur surchauffée de la chaudière (12) de récupération de sortie, de manière à pouvoir ajouter davantage d'eau dans le système d'injection de vapeur tout en maintenant le mélange de vapeur résultant à la vapeur surchauffée.

14. Procédé selon la revendication 1, dans lequel la phase supplémentaire d'application de vapeur perdue en provenance d'une source extérieure dans le système d'injection de vapeur.

15. Moteur à turbine à gaz comprenant en série dans le sens d'écoulement, un compresseur, un brûleur (40), et une turbine, un trajet d'écoulement de gaz dans le moteur, un système de combustible et de vapeur et possédant une tuyère à double flux (44) pour fournir du combustible au centre et de la vapeur coaxialement autour de l'orifice de combustible au dôme (42) du brûleur, caractérisé par un moyen (52,66) mélangeur et éjecteur de pulvérisation d'eau couplé à la tuyère à double flux, pour pulvériser de l'eau dans la vapeur surchauffée, afin de vaporiser l'eau par la vapeur surchauffée, afin de vaporiser qui y circule, et pour mélanger la vapeur d'eau avec la vapeur surchauffée pour produire un mélange de vapeur surchauffée résultant d'un débit massique supérieur pour l'injection dans le trajet d'écoulement de gaz, ledit mélange de vapeur surchauffée ayant une température de vapeur résultante d'au moins 28°C (50°F) de surchauffe.

16. Moteur à turbine à gaz selon la revendication 15, comportant, en outre, un système de prise de moteur couplé au trajet d'écoulement de gaz et comportant un orifice de prise (62), ledit système d'injection de vapeur étant en outre couplé à l'orifice de prise pour l'alimentation en vapeur surchauffée du trajet d'écoulement de gaz, et dans lequel ledit moyen (52,66) mélangeur et éjecteur de vapeur d'eau est couplé au système de prise.

17. Moteur à turbine à gaz selon la revendication 16, dans lequel ledit système à prise est couplé au brûleur pour fournir le mélange de vapeur résultant à l'air d'appoint du conduit de dérivation dans le brûleur (40).

18. Moteur à turbine à gaz selon la revendication 15, comprenant des ailettes de turbines, ledit système d'injection de vapeur et ledit moyen (52,66) mélangeur et éjecteur d'eau pulvérisée étant couplés auxdites ailettes, grâce à quoi le mélange de vapeur résultant est appliqué aux ailettes.

19. Moteur à turbine à gaz selon la revendication 15, caractérisé en ce qu'il comprend une chaudière formant source extérieure de vapeur indépendant du moteur à turbine à gaz pour fournir de la vapeur audit système d'injection de vapeur.

**Patentansprüche**

1. Verfahren zum Vergrößern der Ausgangsleistung eines Gasturbinentriebwerks mit Dampfinjektion, die einen Verdichter, eine Brennkammer (40), die einen Dom (42), der Brennstoff und Dampf von einer dualen Strömungsdüse (44) empfängt, die Brennstoff in das Zentrum und Dampf koaxial um die Brennstofföffnung herum liefert, und eine Turbine in einer Reihenverbindung, wobei eine Gasströmungsbahn hindurchführt, und ein System aufweist zur Injektion von überhitztem Dampf in die Gasströmungsbahn, wobei in dem Verfahren Wasser in das Dampfinjektionssystem gesprüht wird, wodurch das Wasser durch den überhitzten Dampf verdampft wird,
dadurch gekennzeichnet, daß das verdampfte Wasser mit dem existierenden Dampf in dem Dampfinjektionssystem gemischt wird, so daß der resultierende Dampf auf einer Temperatur von wenigstens 28°C (50°F) Überhitzung ist und zusätzlicher Dampf dem Dom aus der dualen Düse zugeführt wird, um eine resultierende erhöhte Massenströmung der überhitzten Dampfmischung für eine Injektion in die Gasströmungsbahn zu erhalten.

2. Verfahren nach Anspruch 1, wobei das in das Dampfinjektionssystem gesprühte Wasser eine Tröpfchengröße von weniger als 70 Micrometer hat.

3. Verfahren nach Anspruch 1, wobei der Druck des in das Dampfinjektionssystem gesprühten Wassers wenigstens so hoch ist, wie der Druck des überhitzten Dampfes in dem System.

4. Verfahren nach Anspruch 1, wobei das Wasser vorgewärmt wird.

5. Verfahren nach Anspruch 1, wobei das Verhältnis des Dampfes zu dem Brennstoff in dem Dom auf 2,75/1 gehalten wird.

6. Verfahren nach Anspruch 1, wobei die Brennkammer Verdünnungsluft aus dem Verdichterausgang empfängt und wobei das Dampfinjektionssystem Dampf zu der Verdünnungsluft hinzufügt.

7. Verfahren nach Anspruch 6, wobei der resultierende überhitzte Dampf auf einem Wert von weniger als 100 % relativer Feuchtigkeit in der Verdünnungsluft gehalten wird.

8. Verfahren nach Anspruch 1, wobei das Dampfinjektionssystem auch eine Abzapföffnung (62) am Eingang zur Brennkammer speist und Wasser in die Abzapföffnung gesprüht wird.

9. Verfahren nach Anspruch 8, wobei der resultierende überhitzte Dampf aus der Abzapföffnung sich mit Brennkammerbypass-Verdünnungsluft aus dem Verdichterausgang mischt.

10. Verfahren nach Anspruch 1, wobei die Gasturbine ferner ein Rückgewinnungs-Abgasboilersystem (12) aufweist zur Lieferung des Dampfes für das Dampfinjektionssystem.

**11.** Verfahren nach Anspruch 1, wobei der Dampf für das Dampfinjektionssystem aus Quellen außerhalb der Gasturbine zugeführt wird.

**12.** Verfahren nach Anspruch 1, wobei der resultierende Dampf Schaufeln der Turbine (n) zugeführt wird und die Temperatur des resultierenden Dampfes oberhalb der Sättigungstemperatur bei dem Druck ist, bei dem er den Schaufeln zugeführt wird.

**13.** Verfahren nach Anspruch 10, wobei Abwärme von einer externen Quelle zugeführt wird, um die Temperatur des überhitzten Dampfes aus dem Rückgewinnungs-Abgasboiler (12) zu erhöhen, wodurch mehr Wasser in das Dampfinjektionssystem eingegeben werden kann und trotzdem die resultierende Dampfmischung bei überhitztem Dampf beibehalten wird.

**14.** Verfahren nach Anspruch 1, wobei ferner Abwärme von einer externen Quelle in das Dampfinjektionssystem eingegeben wird.

**15.** Gasturbinentriebwerk mit einer Reihenströmungsanordnung von einem Verdichter, einer Brennkammer (40) und einer Turbine, einer Gasströmungsbahn durch das Triebwerk, einem Brennstoff- und Dampfsystem und mit einer dualen Strömungsdüse (44) zur Lieferung von Brennstoff in das Zentrum und Dampf koaxial um die Brennstofföffnung herum zu dem Dom (42) der Brennkammer, gekennzeichnet durch einen Wassersprühejektor- und Mischereinrichtung (52, 66), die mit der dualen Strömungsdüse gekoppelt ist, zum Sprühen von Wasser in den überhitzten Dampf zum Verdampfen des Wassers durch den darin strömenden überhitzten Dampf und zum Mischen des Wasserdampfes mit dem überhitzten Dampf, um eine resultierende überhitzte Dampfmischung von größerer Massenströmung zur Injektion in die Gasströmungsbahn zu erzeugen, wobei die überhitzte Dampfmischung eine resultierende Dampftemperatur von wenigstens 28°C (50°F) Überhitzung aufweist.

**16.** Gasturbinentriebwerk nach Anspruch 15, wobei ein Triebwerksabzapfsystem mit der Gasströmungsbahn verbunden ist und eine Abzapföffnung (62) aufweist, wobei das Dampfinjektionssystem ferner mit der Abzapföffnung gekoppelt ist zum Zuführen von überhitztem Dampf zu der Gasströmungsbahn und wobei die Wassersprühejektor- und Mischeinrichtung (52, 66) mit dem Abzapfsystem gekoppelt ist.

**17.** Gasturbinentriebwerk nach Anspruch 16, wobei das Abzapfsystem mit der Brennkammer gekoppelt ist zum Zuführen der resultierenden Dampfmischung zu der Bypassverdünnungsluft in der Brennkammer (40).

**18.** Gasturbinentriebwerk nach Anspruch 15, wobei das Dampfinjektionssystem und die Wassersprühejektor- und Mischeinrichtung (52, 66) mit Schaufeln von Turbinen gekoppelt ist, wodurch die Schaufeln mit der resultierenden Dampfmischung beaufschlagt sind.

**19.** Gasturbinentriebwerk nach Anspruch 15, wobei ein fehlangepaßter, eine externe Quelle bildender Boiler (92) zu dem Gasturbinentriebwerk vorgesehen ist zum Liefern von Dampf für das Dampfinjektionssystem.

FIG. 1

FIG. 3

FIG. 4

FIG. 2

SUPERHEATED STEAM FROM H.P. BOILER

62

BLEED PORT

46 FUEL

70

HIGH PRESSURE HOT WATER SPRAY

66

EJECTOR + MIXER

68

48

HIGH PRESSURE HOT WATER SPRAY

52

54

50

EJECTOR + MIXER

SUPERHEATED STEAM FROM H.P. BOILER

56 42 58 40

43

STEAM

STEAM STEAM

FROM COMPRESSOR

AIR

STEAM FUEL

44

AIRCRAFT BLEED SYSTEM

60

STEAM

64

EP 0 318 706 B1